# EUROPEAN PATENT APPLICATION

(11) **EP 2 119 622 A1**
(43) Date of publication of application: **18.11.2009**
(21) Application number: 08156162.3
(22) Date of filing: 14.05.2008
(51) Int. Cl.: B62K 15/00, B62M 7/08

(54) **Foldable electric bicycle**

(71) Applicant: U10 Inc., Sinyi District, Taipei City 110, Taiwan (TW)
(72) Inventor: Lin, I Shun, 110, Taipei City (TW)
(74) Representative: Viering, Jentschura & Partner

(57) **Abstract**

A folding electric motorcycle includes an X-shaped frame consisting of a lower front (12), a lower rear (14), an upper front (11), and an upper rear supporting arm (13); a front and a rear wheel (2) respectively mounted to distal ends of the lower front and lower rear supporting arms; a saddle (3) pivotally connected to a distal end of the upper rear supporting arm; a handlebar (4) rotatably connected to a distal end of the upper front supporting arm; a locking mechanism (5) mounted between the lower front and lower rear supporting arms for holding the frame in an extended position; a steering mechanism (61,65,62) arranged between the handlebar and the front wheel for steering the bicycle; and an electric motor (25).

## Description

### FIELD OF THE INVENTION

The present invention relates to a folding bicycle, and more particularly to a folding bicycle which has simplified structure and is easily foldable and extendable through simple steps. In a folded state, the folding bicycle has a minimized volume and can be conveniently carried with car or taken on a public transport, and is therefore an ideal alternative traffic means for people.

### BACKGROUND OF THE INVENTION

Many types of folding bicycles have been developed and widely adopted as pollution-free traffic means. These folding bicycles can be folded to minimize the volume thereof and be easily carried with a car or taken on a public transport for riding anywhere.

Generally, a folding bicycle includes four foldable parts, that is, the handlebar, the saddle, the front wheel, and the rear wheel. For example, Taiwanese Patent Publication No. 578753 discloses an X-type folding bicycle, in which the handlebar and the front fork are respectively equipped with an upper and a lower union. A spring is positioned between the upper and lower unions to form a shock-absorbing structure. A folding unit in the form of a pivotally turnable box is arranged at a center of the bicycle frame. An adjusting unit is mounted at a center of the rear wheel for connecting to an auxiliary wheel. When not in use, the bicycle can be folded and conveniently carried or stored.

However, no matter what kind of structure a folding bicycle has, the manufacturing thereof is normally subjected to three major limits as follows: (1) The rear wheel must be linked with a gearwheel chain driven with the rider's feet; (2) The front wheel must be spaced from the rear wheel by a predetermined distance; and (3) The handlebar must be connected to a hub of the front wheel.

Due to the above limits, the bicycle frame of the conventional folding bicycle is generally simply divided into a front part and a rear part which are connected by a hinge. By means of a locking mechanism, the two parts can be firmly held in an extended state. When the locking mechanism is unlocked, the front and rear parts of the bicycle frame can be turned about the hinge toward each other for the front and rear wheels to position side by side. At best, the handlebar could be further folded to one side of the folded bicycle frame. It is troublesome to fold and extend the frame of the conventional folding bicycle. Besides, the bicycle still occupies a considerably large volume after being folded.

It is therefore tried by the inventor to develop an improved folding bicycle to overcome the disadvantages in the conventional folding bicycles.

### SUMMARY OF THE INVENTION

A primary object of the present invention is to provide a folding bicycle which has simplified structure and is easily foldable and extendable via simple steps. When being folded, the bicycle has a minimized volume and can be conveniently carried with a car or taken on a public transport to be an ideal alternative traffic means.

To achieve the above and other objects, the folding bicycle of the present invention includes an X-shaped frame consisting of a lower front supporting arm, a lower rear supporting arm, an upper front supporting arm, and an upper rear supporting arm, each of the supporting arms having a distal end and a proximal end; a front wheel and a rear wheel respectively mounted to the distal ends of the lower front and lower rear supporting arms; a saddle pivotally connected to the distal end of the upper rear supporting arm; a handlebar rotatably connected to the distal end of the upper front supporting arm; a locking mechanism mounted on the frame between the lower front and lower rear supporting arms for holding the frame in an extended position; and a steering mechanism arranged between the handlebar and the front wheel for steering the bicycle.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is an assembled side view of a folding bicycle according to a preferred embodiment of the present invention;
Fig. 2 shows the folding bicycle of Fig. 1 has a link in a steering mechanism provided below a handlebar to be parallel with an upper front supporting arm;
Fig. 3 is similar to Fig. 2 showing the handlebar is turned by a certain angle;
Fig. 4 is an enlarged side view of the circled area of Fig. 1 showing the operation of a locking mechanism on the folding bicycle of Fig. 1;
Fig. 5 shows upper front and upper rear supporting arms of the folding bicycle of Fig. 1 are extended from a folded position;
Fig. 6 shows lower front and lower rear supporting arms of the folding bicycle of Fig. 1 are extended from a folded position; and
Fig. 7 shows the folding bicycle of Fig. 1 in a fully extended state.

### DETAILED DESCRIPTION OF THE PREFERRED EMBODIMENTS

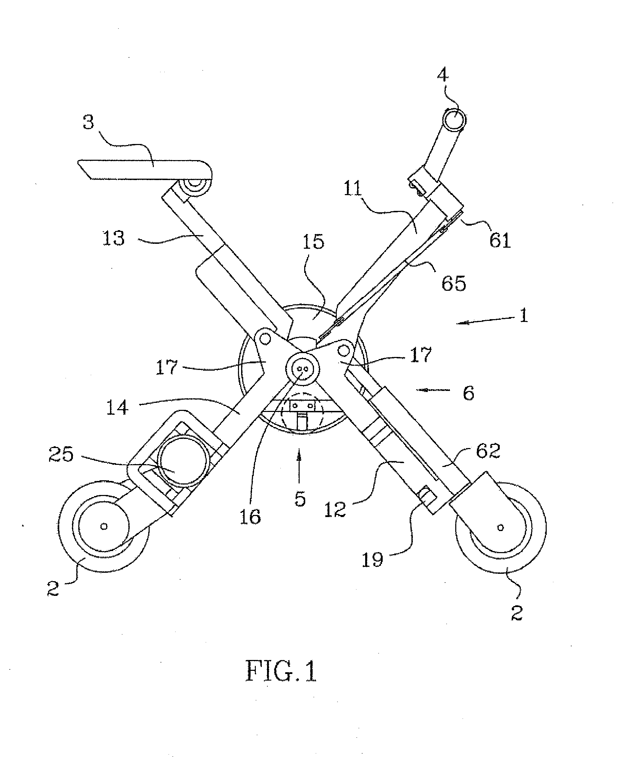

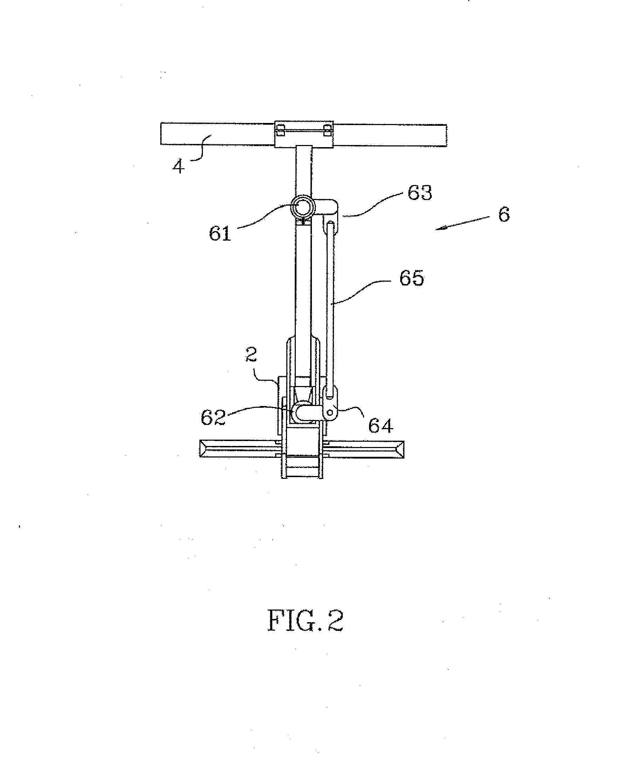

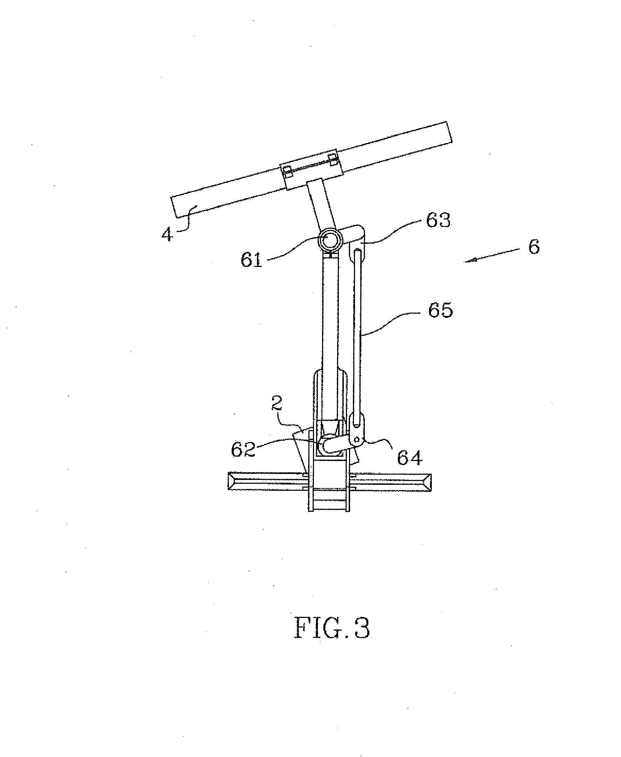

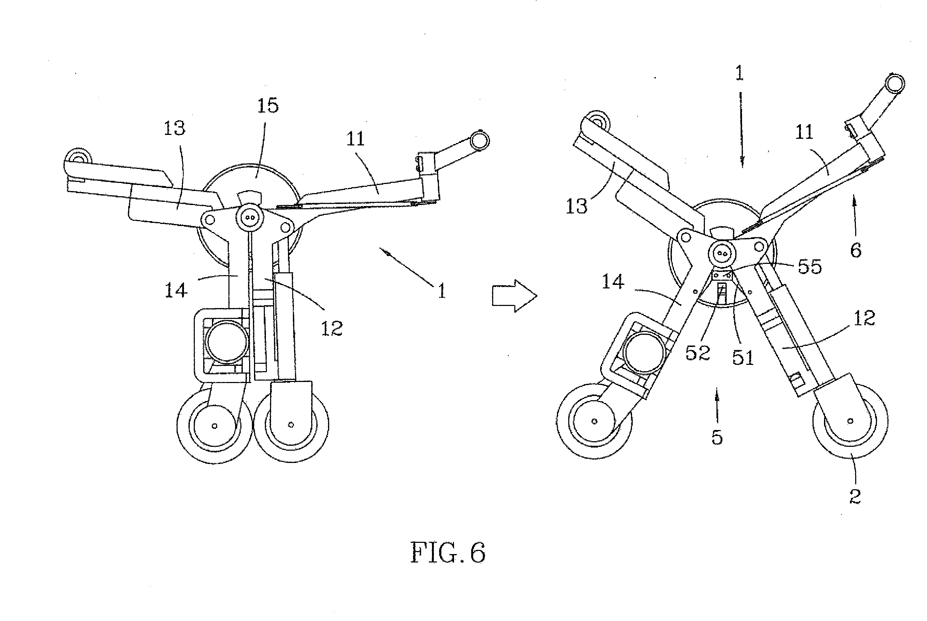

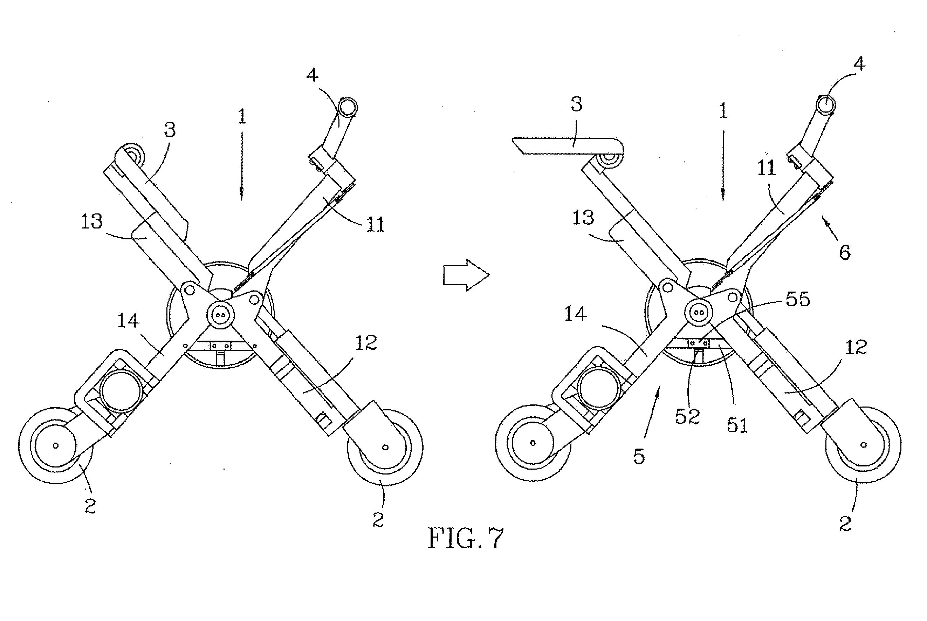

Please refer to Figs. 1 to 7. A folding bicycle according to a preferred embodiment of the present invention includes an X-shaped frame 1 consisting of a plurality of foldable and extendable supporting arms, a front and a rear wheel 2, a saddle 3, a T-shaped handlebar 4, a locking mechanism 5, and a steering mechanism 6.

The frame 1 includes a central disc 15 and a central shaft 16 installed on the central disc 15. The foldable and extendable supporting arms of the frame 1 include an upper front supporting arm 11, a lower front supporting arm 12, an upper rear supporting arm 13, and a lower rear supporting arm 14. Each of the supporting arms 11, 12, 13, 14 has a distal end and a proximal end. Each of the proximal ends of the lower front and lower rear supporting arms 12, 14 is formed with two parallelly spaced lugs 17. The proximal ends of the upper front supporting arm 11 and the upper rear supporting arm 13 are respectively pivotally connected to the lugs 17 of the lower front and lower rear supporting arms 12, 14. The central shaft 16 is extended through the lugs 17 to pivotally connect the lower front and lower rear supporting arms 12, 14 to the central disc 15.

The front and rear wheels 2 are respectively mounted to the distal ends of the lower front and lower rear supporting arms 12, 14 of the frame 1.

The saddle 3 is pivotally connected to the distal end of the upper rear supporting arm 13. When not in use, the saddle 3 is forward folded to attach to a front side of the upper rear supporting arm 13. To use the saddle 3, simply pivotally turns it rearward.

The T-shaped handlebar 4 is rotatably connected to a rotary shaft 61 mounted to the distal end of the upper front supporting arm 11. When not in use, the handlebar 4 may be rotated to a position in parallel to the upper front supporting arm 11 to occupy only a minimized space.

The locking mechanism 5 is located between the central disc 15 and the lower front and lower rear supporting arms 12, 14. When the X-shaped frame 1 is extended, the locking mechanism 5 functions to firmly hold the frame 1 in the extended state.

The steering mechanism 6 is arranged between the handlebar 4 and the front wheel 2 for steering the bicycle.

In addition, two upward foldable pedals 19 are pivotally connected to two sides of the lower front supporting arm 12; and an electric driving unit 25 is arranged on the rear wheel 2 for providing power needed to drive the bicycle to move.

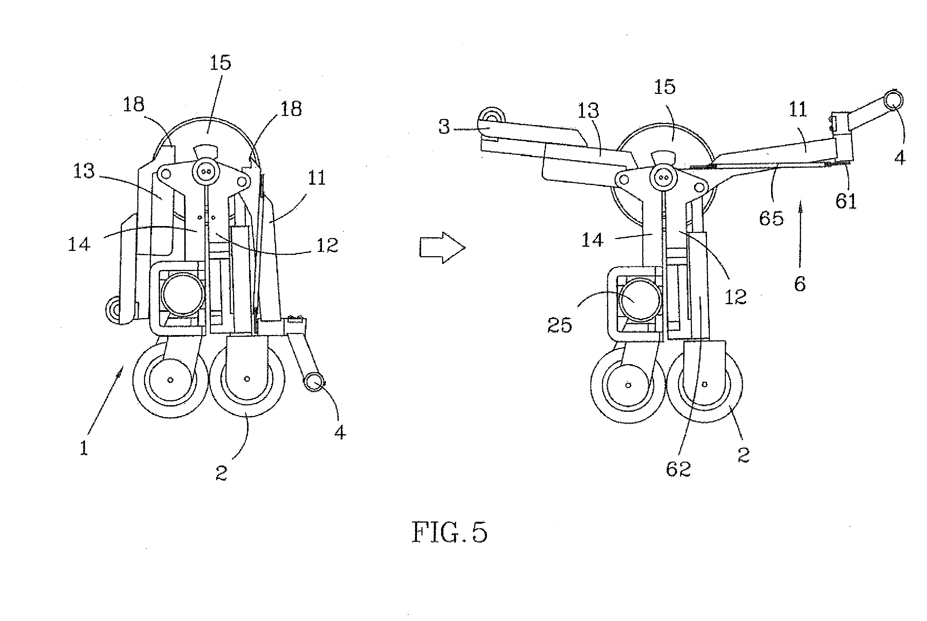

The proximal ends of the upper front and upper rear supporting arms 11, 13 are formed with a stopper section 18 each (as shown in Fig. 5) . The proximal ends of the lower front and lower rear supporting arms 12, 14 are also formed with stopper sections (not shown) corresponding to the stopper sections 18 on the upper front and upper rear supporting arms 11, 13. When the upper front and upper rear supporting arms 11, 13 are extended to a predetermined extent, the stopper sections 18 on the upper front and upper rear supporting arms 11, 13 respectively abut against the stopper sections on the lower front and lower rear supporting arms 12, 14 to restrict the upper front and upper rear supporting arms 11, 13 to a predetermined extending angle. The stopper sections 18 also function as fulcrums when the supporting arms 11, 12, 13, and 14 are turned.

Please refer to Figs. 1 to 3. The steering mechanism 6 includes a first rotary shaft 61 mounted to the distal end of the upper front supporting arm 11, a second rotary shaft 62 mounted to the lower front supporting arm 12, a first elbow joint 63 connected to the first rotary shaft 61, a second elbow joint 64 connected to the second rotary shaft 62, and a link 65 pivotally connected at two ends to the first and second elbow joints 63, 64 to be parallel with the upper front supporting arm 11.
The handlebar 4 is rotatably connected to the first rotary shaft 61. The second rotary shaft 62 is located above the front wheel 2 in parallel to the lower front supporting arm 12. With the above arrangements, when it is desired to ride the bicycle, a rider needs only to hold and turn the handlebar 4, and the front wheel 2 will be brought by the handlebar 4 via the link 65 to turn synchronously to thereby steer the bicycle to different directions.

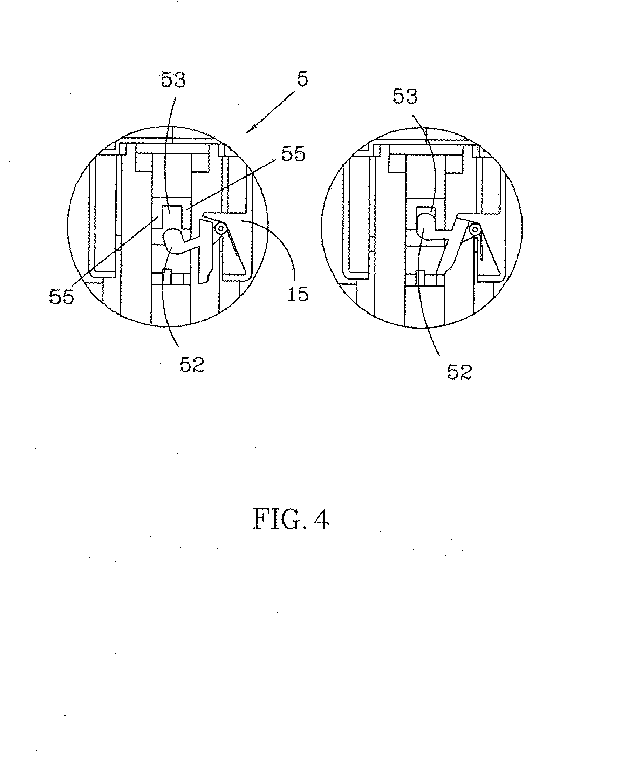

Please refer to Figs. 4 to 7. The locking mechanism 5 includes a hinge 51 and a hook 52 pivotally connected at an end to the disc 15. The hinge 51 has two outer ends separately pivotally connected to the lower front supporting arm 12 and the lower rear supporting arm 14, and two inner ends pivotally connected to two ends of two parallelly spaced elevating blocks 55. A retaining space 53 is defined between the two spaced elevating blocks 55.

To unfold the bicycle, the upper front and upper rear supporting arms 11, 13 are first pivotally turned upward. As mentioned above, when the upper front and upper rear supporting arms 11, 13 are extended to a certain extent, the stopper sections 18 of the upper front and upper rear supporting arms 11, 13 respectively abut against the stopper sections of the lower front and lower rear supporting arms 12, 14 to restrict the upper front and upper rear supporting arms 11, 13 to a predetermined unfolding angle. In addition, with the stopper sections 18 functioning as fulcrums when the supporting arms 11, 12, 13, and 14 are turned.

When the lower front and lower rear supporting arms 12, 14 are pivotally turned away from each other to unfold the bicycle, the elevating blocks 55 are driven by the hinge 51 to move downward, and the hook 52 gradually extends into the retaining space 53 to engage with the elevating blocks 55 and thereby hold the lower front supporting arm 12 and the lower rear supporting arm 14 in the extended position. It is noted when a rider sits on the saddle 3 of the bicycle, the rider's weight makes the hook 52 more firmly engaged with the elevating blocks 55 without the risk of unexpectedly springing out of and releasing from the retaining space 53 under an external impact. Then the saddle 3 and the pedals 19 are sequentially pivotally turned outward and the handlebar 4 is turn to a normal position for steering to fully extend the bicycle. Accordingly, the bicycle can be easily extended via a few simple steps.

When it is desired to fold the bicycle, a user needs only to pull the hook 52 outward with hand to slightly disengage the hook 52 from the elevating blocks 55. Then, when the lower front supporting arm 12 and the lower rear supporting arm 14 are pivotally turned toward each other, the elevating blocks 55 are moved upward to fully disengage the hook 52 from the retaining space 53.

The frame 1 can be made of a magnesium-aluminum alloy to reduce the weight of the bicycle.

The present invention has been described with a preferred embodiment thereof and it is understood that many changes and modifications in the described embodiment can be carried out without departing from the scope and the spirit of the invention that is intended to be limited only by the appended claims.

## Claims

1. A folding bicycle comprising:
an X-shaped frame consisting of a lower front supporting arm, a lower rear supporting arm, an upper front supporting arm, and an upper rear supporting arm, the supporting arms being pivotally turnable and having a distal and a proximal end each;
a front wheel and a rear wheel respectively mounted to the distal ends of the lower front and lower rear supporting arms of the frame;
a saddle pivotally connected to the distal end of the upper rear supporting arm;
a handlebar rotatably connected to the distal end of the upper front supporting arm;
a locking mechanism mounted on the frame between the lower front and lower rear supporting arms for holding the X-shaped frame in an extended position; and
a steering mechanism arranged between the handlebar
and the front wheel for steering the bicycle.

2. The folding bicycle as claimed in claim 1, wherein the frame further includes a central disc and a central shaft installed on the central disc; each of the proximal ends of the lower front and lower rear supporting arms being formed with two parallelly spaced lugs, and the proximal ends of the upper front and upper rear supporting arms being respectively pivotally connected to the lugs of the lower front and lower rear supporting arms; the central shaft being extended through the lugs at the proximal ends of the lower front and lower rear supporting arms to pivotally connect the lower front and lower rear supporting arms to the central disc; the proximal ends of the upper front and upper rear supporting arms being formed with a stopper section each, and the proximal ends of the lower front and lower rear supporting arms also being correspondingly formed with a stopper section each; whereby when the upper front and upper rear supporting arms are extended to a predetermined extent, the stopper sections of the upper front and upper rear supporting arms respectively abutting against the stopper sections of the lower front and lower rear supporting arms to restrict the upper front and upper rear supporting arms to a predetermined unfolding angle; and the stopper sections also functioning as fulcrums when the supporting arms are turned.

3. The folding bicycle as claimed in claim 2, wherein the locking mechanism includes a hinge and a hook; the hinge having two outer ends pivotally connected to the lower front and lower rear supporting arms and two inner ends pivotally connected to two parallelly spaced elevating blocks, and a retaining space being defined between the two elevating blocks; the hook being mounted on the central disc; whereby when the lower front and lower rear supporting arms are pivotally turned away from each other to lower the elevating blocks, the hook is extended into the retaining space to engage with the elevating blocks.

4. The folding bicycle as claimed in claim 3, further comprising two pedals pivotally connected to two sides of the lower front supporting arm and upward turnable relative to the lower front supporting arm, and an electric driving unit arranged on the rear wheel for providing power needed to drive the bicycle to move.

5. The folding bicycle as claimed in claim 4, wherein the steering mechanism includes a first rotary shaft mounted to the distal end of the upper front supporting arm, a second rotary shaft mounted to the lower front supporting arm, a first elbow joint connected to the first rotary shaft, a second elbow joint connected to the second rotary shaft, and a link connected at two ends to the first and the second elbow joints.

6. The folding bicycle as claimed in claim 5, wherein the saddle is pivotally connected to a front side of the distal end of the upper rear supporting arm and is rearward turnable to an extended position for use, and the handlebar being T-shaped and rotatably connected to the first rotary shaft.

7. The folding bicycle as claimed in claim 6, wherein the link is connected at two ends to the first and second elbow joints to be parallel with the upper front supporting arm, and the second rotary shaft being located above the front wheel to be parallel with the lower front supporting arm.
